# EUROPÄISCHE PATENTSCHRIFT

(11) **EP 3 753 798 B1**
(45) Veröffentlichungstag und Bekanntmachung des Hinweises auf die Patenterteilung: **20.11.2024**
(21) Anmeldenummer: 20180360.8
(22) Anmeldetag: 16.06.2020
(51) Int. Cl.: B61D 33/00, B60R 11/00, B61D 37/00, B61D 45/00, B62H 3/04

(54) **HALTEVORRICHTUNG FÜR EINEN INNENRAUM EINES FAHRZEUGS**
HOLDING DEVICE FOR AN INTERIOR OF A VEHICLE
DISPOSITIF DE MAINTIEN POUR UN HABITACLE D'UN VÉHICULE

(30) Priorität: 18.06.2019 AT 505472019
(43) Veröffentlichungstag der Anmeldung: 23.12.2020
(73) Patentinhaber: Siemens Mobility Austria GmbH, 1210 Wien (AT)
(72) Erfinder: Länger, Christoph, 1170 Wien (AT); Pargfrieder, Joachim, 1140 Wien (AT); Schabka, Marc, 1030 Wien (AT)
(74) Vertreter: Siemens Patent Attorneys

(56) Entgegenhaltungen:
- EP-A1- 2 832 628
- DE-A1- 10 061 736
- DE-A1- 102010 005 689
- DE-A1- 102011 012 903
- DE-U1- 202004 013 092
- DE-U1- 29 804 320
- US-A1- 2018 264 984

## Beschreibung

Die Erfindung betrifft einen Innenraum eines Fahrzeugs, insbesondere eines Schienenfahrzeugs oder eines Busses, mit einer Haltevorrichtung und einem Inneneinrichtungsteil, wobei die Haltevorrichtung einen Vorrichtungskörper umfasst, welcher einstückig mit dem Inneneinrichtungsteil des Fahrzeugs ausgebildet ist oder mit dem Inneneinrichtungsteil des Fahrzeugs verbindbar ist, wobei das Inneneinrichtungsteil ein Sitz oder eine Sitzgruppe ist, und welcher zumindest eine Ausnehmung aufweist, welche von dem Vorrichtungskörper teilweise umgrenzt ist und in welche ein Kontaktkörper einführbar ist, welcher mit dem Vorrichtungskörper kraftschlüssig verbindbar ist.

Fahrzeuginnenräume, insbesondere Innenräume von Verkehrsmitteln wie U-, S-Bahnen, Straßenbahnen, Regional- und Fernverkehrszügen oder Bussen etc. müssen Befestigungsvorrichtungen aufweisen, um beispielsweise Kinderwagen, Fahrräder und Rollstühle etc. gegen unbeabsichtigte Bewegungen zu sichern. Aus dem Stand der Technik sind beispielsweise Befestigungsschlaufen, welche z.B. mit Haltestangen verbunden sein können, oder Rollgurtvorrichtungen, welche z.B. an Sitzgestängen vorgesehen sein können, bekannt.

Aus dem Stand der Technik ist beispielsweise die DE 10 2009 004 525 A1 bekannt. Darin ist eine Rollstuhl-Fangvorrichtung für ein Fahrzeug beschrieben. Die Fangvorrichtung umfasst ein Trägerelement, welches mit einem Wagenkastenaufbau verbunden ist, sowie ein mit dem Trägerelement gelenkig gekoppeltes Sicherungselement. Das Sicherungselement kann beispielsweise als Sicherungsbügel ausgebildet sein. Als Anschlag für das Sicherungselement ist zusätzlich ein Halteelement vorgesehen.

Dieser Ansatz weist in seiner bekannten Form den Nachteil einer komplexen, aus mehreren Bauteilen bestehenden Anordnung auf, welche insbesondere für einen dedizierten Rollstuhlabstellplatz in dem Fahrzeug geeignet ist.

Weiterhin zeigt die DE 10 2011 012903 A1 einen Sitz und eine Sitzanordnung für ein Fahrzeug, wobei ein Sitzteil ein Abstützmittel für ein Rad eines Fahrrads aufweist.

In der DE 298 04 320 U1 ist eine Haltevorrichtung für Fahrräder dargestellt, welche Haltebügel aufweist, die mit einem Klappsitz eines Fahrzeugs verbunden sind.

Die DE 100 61 736 A1 beschreibt eine Klemmvorrichtung für ein Haltemodul zur Arretierung von Fahrzeugen bzw. zweirädrigen Fahrzeugen.

In der DE 10 2010 005689 A1 ist eine Halteeinrichtung für Fahrräder mit in einer Längsrichtung parallel angeordneten Fahrradhaltern beschrieben. Die Fahrradhalter können beispielsweise an Sitzunterseiten eines Fahrzeuginnenraums angeordnet sein.

Die EP 2 832 628 A1 zeigt eine Fahrradhaltevorrichtung, welche in einem Nahverkehrs-Fahrzeug angeordnet ist, wobei eine Haltespange eine Aufnahme für Fahrradpedale umfasst. Es können auch Halteelemente an Seitenwänden und Sitzen des Nahverkehrs-Fahrzeugs angeordnet sein.

Ferner ist in der US 2018/264984 A1 eine Einrichtung zur Aufhängung eines Fahrrads in einem Passagierraum dargestellt.

Darüber hinaus beschreibt die DE 20 2004 013092 U1 eine Haltevorrichtung für ein Fahrrad an einer Stange.

Der Erfindung liegt die Aufgabe zugrunde, eine gegenüber dem Stand der Technik weiterentwickelte, konstruktiv einfache Haltevorrichtung anzugeben, welche im Hinblick auf deren Anordnung im Fahrzeug universell einsetzbar ist.

Erfindungsgemäß wird diese Aufgabe mit einem Innenraum nach Anspruch 1 gelöst.

Dadurch wird eine rasche und mit wenigen Handgriffen bzw. nur mit einem Handgriff durchführbare Fixierung des Kontaktkörpers erzielt. Der Kontaktkörper ist beispielsweise Teil einer Rollvorrichtung (insbesondere eines Rollers). Durch Einführen des Kontaktkörpers in die Ausnehmung wird ein Kraftschluss bzw. ein Reibschluss bewirkt und der Kontaktkörper ist dadurch in der Ausnehmung gehalten. Erfindungsgemäß ist vorgesehen, dass der Vorrichtungskörper einstückig mit einem Inneneinrichtungsteil des Fahrzeugs ausgebildet ist oder dass der Vorrichtungskörper mit einem Inneneinrichtungsteil des Fahrzeugs verbindbar ist.

Das Inneneinrichtungsteil ist ein Sitz, eine Sitzgruppe oder eine Lehne.

Durch diese Maßnahme wird eine große Flexibilität im Hinblick auf Einsatzmöglichkeiten der erfindungsgemäßen Haltevorrichtung erzielt.

Ist die Haltevorrichtung beispielsweise einstückig mit einem Sitz ausgebildet oder mit dem Sitz verbunden, so kann ein Fahrgast Rollvorrichtungen etc. in seiner Nähe belassen während er sitzt und muss sich nicht separate Zonen begeben, um die Rollvorrichtungen etc. dort abzustellen.

Weiterhin wird beispielsweise bei einer Lagerung der Rollvorrichtungen etc. unter dem Sitz vermieden, dass die Rollvorrichtungen etc. in Stehplatz-, Kinderwagen- oder Rollstuhlbereichen abgestellt sind und Hindernisse bzw. Stolperfallen für sich dort aufhaltende Fahrgäste darstellen. Ist der Vorrichtungskörper einstückig mit einem Inneneinrichtungsteil des Fahrzeugs ausgebildet, so wird eine besonders kompakte Haltevorrichtung erzielt, welche beispielsweise Reinigungsarbeiten in dem Innenraum nicht behindert.

Ist der Vorrichtungskörper mit einem Inneneinrichtungsteil des Fahrzeugs verbindbar, so werden dadurch Nachrüstungen mit erfindungsgemäßen Haltevorrichtungen begünstigt.

Es ist günstig, wenn der Vorrichtungskörper im Bereich der zumindest einen Ausnehmung zumindest teilweise mit einem Haftkörper ausgekleidet ist.

Der Haftkörper ist beispielsweise als Gummielement oder Gummilippe etc. ausgeführt.

Durch diese Maßnahme wird der Kraftschluss bzw. der Reibschluss zwischen dem Vorrichtungskörper und dem Kontaktkörper in der Ausnehmung gesteigert.

Eine günstige Lösung wird erreicht, wenn der Haftkörper zumindest teilweise magnetisch ausgeführt ist.

Durch diese Maßnahme wird, bei metallischen Kontaktkörpern, ein besonders sicherer Halt des Kontaktkörpers in der Ausnehmung bewirkt. Bei bereits wirkendem Kraftschluss bzw. Reibschluss zwischen dem Vorrichtungskörper und dem Kontaktkörper wird dadurch eine redundante Sicherung des Kontaktkörpers in der Ausnehmung erzielt.

Ferner ist es hilfreich, wenn der Vorrichtungskörper im Bereich der zumindest einen Ausnehmung eine rutschhemmende Beschichtung aufweist.

Auch diese Maßnahme fördert den Kraftschluss bzw. den Reibschluss zwischen dem Vorrichtungskörper und dem Kontaktkörper in der Ausnehmung.

Eine günstige Lösung wird erreicht, wenn der Vorrichtungskörper im Bereich der zumindest einen Ausnehmung eine Verriegelungsvorrichtung aufweist.

Die Verriegelungsvorrichtung weist beispielsweise ein erstes Arretiermittel, welches über eine erste Feder mit dem Vorrichtungskörper verbunden ist, oder zumindest eine Arretiernoppe auf.

Dadurch wird eine einfache und zugleich sichere Verriegelung der Rollvorrichtung etc. bewirkt.

Dadurch, dass das erste Arretiermittel oder die Arretiernoppe im Bereich der Ausnehmung vorgesehen ist, ist die Verriegelungsvorrichtung besonders platzsparend und kompakt ausgeführt.

Eine vorteilhafte Ausgestaltung erhält man, wenn die zumindest eine Ausnehmung zumindest teilweise keilförmig ausgebildet ist.

Durch diese Maßnahme wird ein Einführen des Kontaktkörpers in die erfindungsgemäße Haltevorrichtung erleichtert.

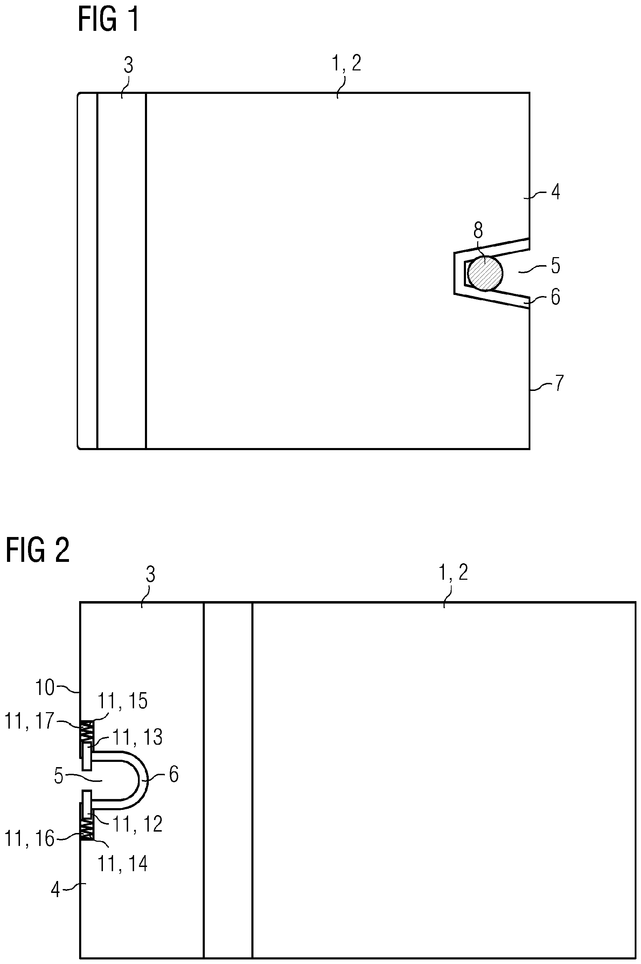

Fig. 1 zeigt eine schematische Darstellung eines Sitzes 1 als Inneneinrichtungsteil in einem Innenraum eines Schienenfahrzeugs. Der Sitz 1 ist als Grundriss dargestellt, weist eine Sitzfläche 2 sowie eine Lehne 3 auf und fungiert im Bereich der Sitzfläche 2 als Vorrichtungskörper 4 einer ersten beispielhaften Ausführungsvariante einer erfindungsgemäßen Haltevorrichtung. Der Vorrichtungskörper 4 ist also einstückig mit dem Sitz 1 ausgebildet.

Der Vorrichtungskörper 4 weist eine keilförmige Ausnehmung 5 auf, welche in der Sitzfläche 2 des Sitzes 1 vorgesehen und mit einem Haftkörper 6 ausgekleidet ist.

Erfindungsgemäß ist es auch denkbar, dass die Ausnehmung 5 z.B. zylindrisch oder teilweise zylindrisch etc. ausgeführt ist.

Die Ausnehmung 5 ist teilweise von dem Vorrichtungskörper 4 umgrenzt und zu einer Vorderseite 7 der Sitzfläche 2 des Sitzes 1 hin offen.

Der Haftkörper 6 ist als Gummilippe ausgebildet und mit dem Sitz 1, welcher in einem harten und widerstandsfähigen Kunststoff ausgebildet ist, verklebt. In die Gummilippe ist ein Magnet eingearbeitet, d.h. der Haftkörper 6 ist teilweise magnetisch ausgeführt.

Dabei handelt es sich um eine günstige Lösung. Erfindungsgemäß ist es auch denkbar, den Vorrichtungskörper 4 im Bereich der Ausnehmung 5 mit einem rutschhemmenden Belag zu beschichten.

Weiterhin ist es denkbar, die Ausnehmung 5 nicht zur Gänze, sondern nur teilweise mit dem Haftkörper 6 auszukleiden bzw. zu beschichten, d.h. beispielsweise nur in jenem Bereich der Ausnehmung 5, in welcher ein Kontaktkörper fixiert werden soll.

Ferner ist es vorstellbar, dass der ganze Haftkörper 6 magnetisch ausgeführt ist, dass der Vorrichtungskörper 4 im Bereich der Ausnehmung 5 magnetisch ausgeführt ist oder dass im Bereich der Ausnehmung 5 ein separater, von der Gummilippe getrennter Magnet angeordnet ist.

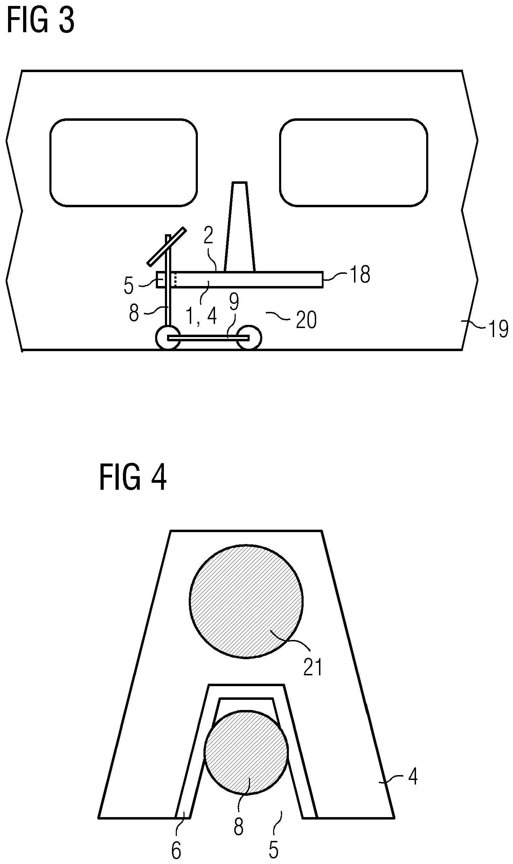

In die Ausnehmung 5 ist eine metallische Lenkstange 8 einer als Roller 9, welcher in Fig. 3 gezeigt ist, ausgeführten Rollvorrichtung eingeführt. Die Lenkstange 8 fungiert demnach als Kontaktkörper in Bezug auf den Haftkörper 6. Aufgrund eines Kraftschlusses bzw. Reibschlusses zwischen dem Haftkörper 6 und der Lenkstange 8, d.h. dem Kontaktkörper, ist die Lenkstange 8 des Rollers 9 in dem Vorrichtungskörper 4 der Haltevorrichtung fixiert.

Der in die Gummilippe eingearbeitete Magnet ist im Kontaktbereich zwischen dem Haftkörper 6 und der Lenkstange 8, d.h. dem Kontaktkörper, vorgesehen. Weiterhin ist die ansonsten zylindrische Lenkstange 8 im Kontaktbereich mit dem Haftkörper 6 kugelförmig-konvex ausgebildet und der Haftkörper 6 kugelförmig-konkav, wodurch ein Einrasten und eine Arretierung der Lenkstange 8 in den bzw. in dem Haftkörper 6 bewirkt werden.

Der Kraftschluss wird aufgrund einer magnetischen Kraft zwischen dem Haftkörper 6 und der Lenkstange 8 verstärkt.

Es ist ein gewisser Kraftaufwand erforderlich, um die Lenkstange 8 wieder aus der Haltevorrichtung zu lösen.

Die Sitzfläche 2 ist in jener in Fig. 1 gezeigten Ausführungsvariante einer erfindungsgemäßen Haltevorrichtung nicht klappbar ausgeführt. Erfindungsgemäß ist es jedoch auch möglich, dass der Sitz 1 als Klappsitz ausgebildet ist.

In Fig. 2 ist ebenfalls ein Sitz 1 als Inneneinrichtungsteil eines Innenraums eines Schienenfahrzeugs schematisch und als Grundriss dargestellt, welcher eine Sitzfläche 2 und eine Lehne 3 aufweist.

Im Unterschied zu Fig. 1 fungiert in Fig. 2 ein um ca. 45° geneigtes Hinterteil der Lehne 3 als Vorrichtungskörper 4 einer zweiten beispielhaften Ausführungsvariante einer erfindungsgemäßen Haltevorrichtung. Die Haltevorrichtung ist im Bereich einer Oberseite des Hinterteils der Lehne 3 vorgesehen, der Vorrichtungskörper 4 ist einstückig mit dem Hinterteil der Lehne 3 ausgebildet.

Der Vorrichtungskörper 4 weist eine teilweise zylindrische, teilweise rechteckförmige Ausnehmung 5 auf, welche mit einem als Gummilippe ausgeführten Haftkörper 6 ausgekleidet ist. Erfindungsgemäß ist es auch vorstellbar, die Ausnehmung z.B. teilweise keilförmig und teilweise zylindrisch auszubilden. Der Haftkörper 6 ist mit dem Hinterteil der Lehne 3 verklebt, es ist jedoch auch denkbar, diesen beispielsweise mit dem Hinterteil der Lehne 3 zu verklemmen.

Die Ausnehmung 5 ist im Bereich einer Rückseite 10 des Hinterteils der Lehne 3 angeordnet, d.h. im Bereich dieser Rückseite 10 kann ein Kontaktkörper (eine in Fig. 1 gezeigte Lenkstange 8 eines in Fig. 3 dargestellten Rollers 9, d.h. einer Rollvorrichtung) in die Ausnehmung 5 eingeführt werden und kraftschlüssig bzw. reibschlüssig über den Haftkörper 6 mit dem Vorrichtungskörper 4 verbunden werden.

Im Bereich der Ausnehmung 5 ist eine Verriegelungsvorrichtung 11 vorgesehen, welche ein erstes Arretiermittel 12 und ein zweites Arretiermittel 13 aufweist. Das erste Arretiermittel 12 und das zweite Arretiermittel 13 sind als Arretierstifte ausgebildet, parallel zu der Rückseite 10 ausgerichtet und ragen in die Ausnehmung 5. Das erste Arretiermittel 12 ist über eine erste Feder 14 und das zweite Arretiermittel 13 über eine zweite Feder 15 mit dem Hinterteil der Lehne 3, d.h. mit dem Vorrichtungskörper 4 verbunden und somit federnd gelagert.

Das erste Arretiermittel 12 und die erste Feder 14 sind in einer ersten Führungshülse 16 des Vorrichtungskörpers 4, das zweite Arretiermittel 13 und die zweite Feder 15 sind in einer zweiten Führungshülse 17 des Vorrichtungskörpers 4 angeordnet und geführt.

Die erste Feder 14 und die zweite Feder 15 sind ebenfalls parallel zu der Rückseite 10 ausgerichtet.

Um den Kontaktkörper in die Ausnehmung 5 einzuführen oder diesen wieder aus der Ausnehmung 5 zu entfernen, müssen das erste Arretiermittel 12 und das zweite Arretiermittel 13 gegen Federkräfte der ersten Feder 14 und der zweiten Feder 15 aus der Ausnehmung 5 geschoben werden. Werden das erste Arretiermittel 12 und das zweite Arretiermittel 13 aus einem vorgespannten Zustand der ersten Feder 14 und der zweiten Feder 15 losgelassen, so bewegen sich das erste Arretiermittel 12 und das zweite Arretiermittel 13 aufgrund der Federkräfte seitlich in die Ausnehmung 5 hinein und arretieren den Kontaktkörper.

Bei einer Ausführung des ersten Arretiermittels 12 und des zweiten Arretiermittels 13 als Arretierstifte handelt es sich um eine günstige Lösung. Erfindungsgemäß ist es jedoch auch vorstellbar, Arretierklinken oder Arretierhaken (ähnlich einem Karabinerverschluss) als erstes Arretiermittel 12 und zweites Arretiermittel 13 vorzusehen und diese über Drehgelenke und Drehfedern mit dem Vorrichtungskörper 4 zu verbinden. Über Drehungen dieser Arretierklinken oder Arretierhaken kann der Kontaktkörper in der Ausnehmung 5 arretiert und wieder freigegeben werden.

In diesem Zusammenhang ist es weiterhin vorstellbar, dass das erste Arretiermittel 12 und das zweite Arretiermittel 13 Griffe zur einfacheren Bedienung aufweisen und dass das erste Arretiermittel 12 und das zweite Arretiermittel 13 ab einer bestimmten Auslenkung selbst in dem Vorrichtungskörper 4 arretiert werden (z.B. über Rasten auf dem ersten Arretiermittel 12, dem zweiten Arretiermittel 13, in der ersten Führungshülse 16 und in der zweiten Führungshülse 17), um ein Einführen des Kontaktkörpers in die Ausnehmung 5 zu erleichtern.

Darüber hinaus ist es möglich, dass die Verriegelungsvorrichtung 11 nur das erste Arretiermittel 12, die erste Feder 14 und die erste Führungshülse 16 aufweist, d.h. dass nur das erste Arretiermittel 12 die Ausnehmung 5 verriegelt und auf das zweite Arretiermittel 13, die zweite Feder 15 und die zweite Führungshülse 17 verzichtet wird. Ferner ist es denkbar, dass eine freistehende Stehplatzlehne in dem Innenraum des Schienenfahrzeugs als Vorrichtungskörper 4 der Haltevorrichtung fungiert, d.h. der Vorrichtungskörper 4 einstückig mit der Stehplatzlehne ausgebildet ist, oder der Vorrichtungskörper 4 mit der Stehplatzlehne verbunden ist. Auch bei der Stehplatzlehne handelt es sich um ein Inneneinrichtungsteil des Schienenfahrzeugs.

Weiterhin ist es möglich, mehr als eine Ausnehmung 5 in dem Hinterteil der Lehne 3 vorzusehen.

Fig. 3 zeigt einen Innenraum eines Schienenfahrzeugs in schematischer Darstellung und als Aufriss. Der Innenraum weist eine Sitzgruppe 18 auf, welche mit einer Innenwand 19 des Schienenfahrzeugs verbunden ist. Im unteren Bereich der Sitzgruppe 18 ist ein Stauraum 20 vorgesehen.

Die Sitzgruppe 18 weist im Bereich einer Sitzfläche 2 eines Sitzes 1 eine dritte beispielhafte Ausführungsvariante einer erfindungsgemäßen Haltevorrichtung auf. Die Haltevorrichtung umfasst einen Vorrichtungskörper 4, welcher einstückig mit dem Sitz 1 ausgebildet ist. In dem Vorrichtungskörper 4 ist eine Ausnehmung 5 vorgesehen, welche mit einem in Fig. 1 gezeigten Haftkörper 6 ausgekleidet ist.

Über den Haftkörper 6 ist als Kontaktkörper eine Lenkstange 8 einer als Roller 9 ausgeführten Rollvorrichtung (die Lenkstange 8 ist somit Teil der Rollvorrichtung) kraftschlüssig bzw. reibschlüssig mit dem Vorrichtungskörper 4 verbunden. Der Roller 9 ist dadurch in der Haltevorrichtung fixiert und im Bereich des Stauraums 20 im unteren Bereich der Sitzgruppe 18 abgestellt.

Der Stauraum 20 weist eine Ladungssicherungseinrichtung auf, welche eine Ladungssicherungsschiene umfasst. Die Ladungssicherungsschiene ist einen Boden des Schienenfahrzeugs eingearbeitet und mit einem metallischen U-Profil ausgekleidet. In der Ladungssicherungsschiene sind Rollen des Rollers 9 eingeführt, wodurch dessen Stellplatz und dessen Ausrichtung parallel zu der Innenwand 19 definiert ist. Zwischen den Rollen und der Ladungssicherungsschiene ist ein leichter Reibschluss vorgesehen, wodurch unbeabsichtigte Bewegungen des Rollers 9 vermieden werden.

Erfindungsgemäß ist es denkbar, eine Mehrzahl an Ladungssicherungsschienen vorzusehen, beispielsweise je eine Ladungssicherungsschiene für jedes Paar von voneinander abgewandten Sitzplätzen der Sitzgruppe 18.

Erfindungsgemäß ist es weiterhin vorstellbar, dass die Ladungssicherungsschiene nicht parallel, sondern schräg zu der Innenwand 19 ausgerichtet ist.

Erfindungsgemäß können mit der Haltevorrichtung Roller 9 oder Elektroroller fixiert werden. Insbesondere eignen sich längliche, stab- oder stangenförmige Körper für eine Fixierung in der Haltevorrichtung.

Die erfindungsgemäße Haltevorrichtung ist in dieser dritten beispielhaften Ausführungsvariante in dem Innenraum des Schienenfahrzeugs vorgesehen. Sie kann jedoch in Innenräumen unterschiedlicher Fahrzeuge eingesetzt sein, z.B. auch in Bussen wie Autobussen, O-Bussen, Elektrobussen etc.

Weiterhin kann die Sitzgruppe 18 auch mehr als eine Ausnehmung 5 aufweisen, welche in günstiger Weise voneinander versetzt angeordnet sind, um mehrere in erfindungsgemäßen Haltevorrichtungen fixierte Roller 9 geschlichtet verstauen zu können.

In Fig. 4 ist eine Haltestange 21 eines Innenraums eines Schienenfahrzeugs schematisch, geschnitten und als Grundriss dargestellt.

Mit der Haltestange 21 ist ein Vorrichtungskörper 4 einer vierten beispielhaften Ausführungsvariante einer erfindungsgemäßen Haltevorrichtung verschweißt, d.h. stoffschlüssig verbunden. Der Vorrichtungskörper 4 weist eine mit einem Haftkörper 6 ausgekleidete Ausnehmung 5 auf, in welche als Kontaktkörper eine Lenkstange 8 eines in Fig. 3 gezeigten Rollers 9, d.h. einer Rollvorrichtung, eingeführt ist. Der Kontaktkörper ist über den Haftkörper 6 kraftschlüssig bzw. reibschlüssig mit dem Vorrichtungskörper 4 verbunden.

Die Ausnehmung 5 und der Haftkörper 6 entsprechen konstruktiv und funktionell jener Ausführungsvariante einer erfindungsgemäßen Haltevorrichtung, welche in Fig. 1 dargestellt ist.

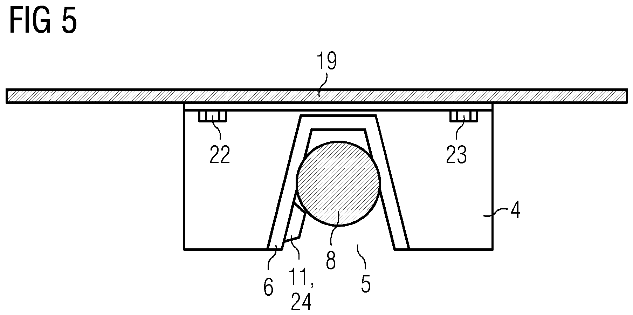

Fig. 5 zeigt eine Innenwand 19 eines Schienenfahrzeugs schematisch, geschnitten und als Grundriss. Der in dieser Figur gezeigte Innenraum ist Stand der Technik und daher kein Schutzgegenstand der beigelegten Ansprüche. Mit der Innenwand 19 ist, in einen Innenraum des Schienenfahrzeugs hineinragend, ein Vorrichtungskörper 4 einer fünften beispielhaften Ausführungsvariante einer erfindungsgemäßen Haltevorrichtung über eine erste Schraube 22, eine zweite Schraube 23 sowie weitere Schrauben verbunden.

Der Vorrichtungskörper 4 weist eine mit einem Haftkörper 6 ausgekleidete Ausnehmung 5 auf, in welche als Kontaktkörper eine Lenkstange 8 eines in Fig. 3 gezeigten Rollers 9, d.h. einer Rollvorrichtung, eingeführt ist. Der als Gummiwulst ausgeführte Haftkörper 6 ist im Bereich der Ausnehmung 5 mit dem Vorrichtungskörper 4 verklebt.

Der Kontaktkörper ist über den Haftkörper 6 kraftschlüssig bzw. reibschlüssig mit dem Vorrichtungskörper 4 verbunden.

Als Verriegelungsvorrichtung 11 weist die in Fig. 5 gezeigte Haltevorrichtung eine Arretiernoppe 24 auf, welche als Verdickung des Haftkörpers 6 ausgebildet ist, d.h. einstückig mit dem Haftkörper 6 ausgeführt ist.

Bei einem Einführen des Kontaktkörpers in die Ausnehmung 5 und dessen Entfernung aus der Ausnehmung 5 muss ein Widerstand aufgrund der Arretiernoppe 24 überwunden werden, d.h. die Arretiernoppe 24 von dem Kontaktkörper durch Kraftaufwendung verformt bzw. eingedrückt werden.

Nach Einführen des Kontaktkörpers in die Ausnehmung 5 und Überwindung des Widerstands aufgrund der Arretiernoppe 24 ist der Kontaktkörper in der Haltevorrichtung arretiert. Erfindungsgemäß kann selbstverständlich auch mehr als eine Arretiernoppe 24 vorgesehen sein.

### Liste der Bezeichnungen

- 1: Sitz
- 2: Sitzfläche
- 3: Lehne
- 4: Vorrichtungskörper
- 5: Ausnehmung
- 6: Haftkörper
- 7: Vorderseite
- 8: Lenkstange
- 9: Roller
- 10: Rückseite
- 11: Verriegelungsvorrichtung
- 12: Erstes Arretiermittel
- 13: Zweites Arretiermittel
- 14: Erste Feder
- 15: Zweite Feder
- 16: Erste Führungshülse
- 17: Zweite Führungshülse
- 18: Sitzgruppe
- 19: Innenwand
- 20: Stauraum
- 21: Haltestange
- 22: Erste Schraube
- 23: Zweite Schraube
- 24: Arretiernoppe

## Patentansprüche

1. Innenraum eines Fahrzeugs, insbesondere eines Schienenfahrzeugs oder eines Busses, mit einer Haltevorrichtung und einem Inneneinrichtungsteil, wobei das Inneneinrichtungsteil ein Sitz (1) oder eine Sitzgruppe (18) ist, wobei die Haltevorrichtung einen Vorrichtungskörper (4) umfasst, welcher einstückig mit dem Inneneinrichtungsteil des Fahrzeugs ausgebildet ist, wobei der Sitz (1) oder die Sitzgruppe (18) als Vorrichtungskörper (4) fungiert, oder mit dem Inneneinrichtungsteil des Fahrzeugs verbindbar ist, und welcher zumindest eine Ausnehmung (5) aufweist, welche von dem Vorrichtungskörper (4) teilweise umgrenzt ist und in welche ein Kontaktkörper einführbar ist, welcher mit dem Vorrichtungskörper (4) kraftschlüssig verbindbar ist, wobei die zumindest eine Ausnehmung (5) in einer Sitzfläche (2) des Sitzes (1) vorgesehen ist und zu einer Vorderseite (7) der Sitzfläche (2) hin offen ist, damit ein Fahrgast den Kontaktkörper in seiner Nähe belassen kann, während er sitzt, oder wobei das Inneneinrichtungsteil eine Lehne (3) ist.

2. Innenraum nach Anspruch 1, **dadurch gekennzeichnet, dass** der Sitz (1) oder die Sitzgruppe (18) unterhalb seiner Sitzfläche (2) oder ihrer Sitzflächen einen Stauraum (20) mit einer Ladungssicherungseinrichtung aufweist.

3. Innenraum nach Anspruch 2, **dadurch gekennzeichnet, dass** die Ladungssicherungseinrichtung zumindest eine Ladungssicherungsschiene aufweist.

4. Innenraum nach einem der Ansprüche 1 bis 3, **dadurch gekennzeichnet, dass** der Vorrichtungskörper (4) im Bereich der zumindest einen Ausnehmung (5) zumindest teilweise mit einem Haftkörper (6) ausgekleidet ist.

5. Innenraum nach Anspruch 4, **dadurch gekennzeichnet, dass** der Haftkörper (6) zumindest teilweise magnetisch ausgeführt ist.

6. Innenraum nach einem der Ansprüche 1 bis 3, **dadurch gekennzeichnet, dass** der Vorrichtungskörper (4) im Bereich der zumindest einen Ausnehmung (5) eine rutschhemmende Beschichtung aufweist.

7. Innenraum nach einem der Ansprüche 1 bis 3, **dadurch gekennzeichnet, dass** der Vorrichtungskörper (4) im Bereich der zumindest einen Ausnehmung (5) zumindest teilweise magnetisch ausgeführt ist oder in der zumindest einen Ausnehmung (5) zumindest ein Magnet vorgesehen ist.

8. Innenraum nach Anspruch 5 oder 7, **dadurch gekennzeichnet, dass** der Kontaktkörper im Kontaktbereich mit dem Haftkörper (6), dem Vorrichtungskörper (4) oder dem zumindest einen Magneten kugelförmig-konvex ausgebildet ist und der Haftkörper (6), der Vorrichtungskörper (4) oder der zumindest eine Magnet kugelförmig-konkav ausgebildet ist.

9. Innenraum nach einem der Ansprüche 1 bis 8, **dadurch gekennzeichnet, dass** der Vorrichtungskörper (4) im Bereich der zumindest einen Ausnehmung (5) eine Verriegelungsvorrichtung (11) aufweist.

10. Innenraum nach Anspruch 9, **dadurch gekennzeichnet, dass** die Verriegelungsvorrichtung (11) zumindest ein erstes Arretiermittel (12) aufweist, welches über eine erste Feder (14) mit dem Vorrichtungskörper (4) verbunden ist.

11. Innenraum nach Anspruch 9, **dadurch gekennzeichnet, dass** die Verriegelungsvorrichtung (11) zumindest eine Arretiernoppe (24) aufweist.

12. Innenraum nach einem der Ansprüche 1 bis 11, **dadurch gekennzeichnet, dass** die zumindest eine Ausnehmung (5) zumindest teilweise keilförmig ausgebildet ist.

13. Innenraum nach einem der Ansprüche 1 bis 12, **dadurch gekennzeichnet, dass** die zumindest eine Ausnehmung (5) zumindest teilweise zylindrisch ausgebildet ist.

14. Innenraum nach einem der Ansprüche 1 bis 13, **dadurch gekennzeichnet, dass** der Kontaktkörper Teil einer Rollvorrichtung, insbesondere eine Lenkstange (8) eines Rollers (9) ist.

## Claims

1. Interior of a vehicle, in particular a rail vehicle or a bus, with a holding apparatus and an interior fitting part, wherein the interior fitting part is a seat (1) or a group of seats (18), wherein the holding apparatus comprises an apparatus body (4), which is designed as a single piece with the interior fitting part of the vehicle, wherein the seat (1) or the group of seats (18) serves as an apparatus body (4) or can be connected to the interior fitting part of the vehicle, and which has at least one recess (5), which is partially delimited by the apparatus body (4) and into which a contact body can be inserted, which can be connected by way of a non-positive fit to the apparatus body (4), wherein the at least one recess (5) is provided in a seating area (2) of the seat (1) and is open towards a front side (7) of the seating area (2), such that, while they are seated, a passenger can leave the contact body in their vicinity, or wherein the interior fitting part is a back rest (3).

2. Interior according to claim 1, **characterised in that** the seat (1) or the group of seats (18) has a stowage space (20) with a load securing facility beneath its seating area (2) or seating areas.

3. Interior according to claim 2, **characterised in that** the load securing facility has at least one load securing rail.

4. Interior according to one of claims 1 to 3, **characterised in that** the apparatus body (4) is at least partially lined with an adhesion body (6) in the region of the at least one recess (5).

5. Interior according to claim 4, **characterised in that** the adhesion body (6) is designed as magnetic at least in part.

6. Interior according to one of claims 1 to 3, **characterised in that** the apparatus body (4) has a slip-proof coating in the region of the at least one recess (5).

7. Interior according to one of claims 1 to 3, **characterised in that** the apparatus body (4) is designed as magnetic at least in part in the region of the at least one recess (5) or at least one magnet is provided in the at least one recess (5) .

8. Interior according to claim 5 or 7, **characterised in that** the contact body is designed as spherical convex in the contact region with the adhesion body (6), the apparatus body (4) or the at least one magnet, and the adhesion body (6), the apparatus body (4) or the at least one magnet is designed as spherical concave.

9. Interior according to one of claims 1 to 8, **characterised in that** the apparatus body (4) has a latching facility (11) in the region of the at least one recess (5).

10. Interior according to claim 9, **characterised in that** the latching facility (11) has at least one first locking means (12), which is connected to the apparatus body (4) by way of a first spring (14).

11. Interior according to claim 9, **characterised in that** the latching facility (11) has at least one locking knob (24).

12. Interior according to one of claims 1 to 11, **characterised in that** the at least one recess (5) is designed at least partially wedge-shaped.

13. Interior according to one of claims 1 to 12, **characterised in that** the at least one recess (5) is designed at least partially cylindrical.

14. Interior according to one of claims 1 to 13, **characterised in that** the contact body is part of a roll apparatus, in particular a steering rod (8) of a scooter (9).

## Revendications

1. Habitacle d'un véhicule, en particulier d'un véhicule sur rails ou d'un bus, avec un dispositif de fixation et une partie d'aménagement intérieur, la partie d'aménagement intérieur étant un siège (1) ou un groupe de sièges (18), le dispositif de fixation comprenant un corps de dispositif (4) constitué d'une seule pièce avec la partie d'aménagement intérieur du véhicule, dans lequel le siège (1) ou le groupe de sièges (18) fait fonction de corps de dispositif (4), ou pouvant être lié à la partie d'aménagement intérieur du véhicule, et qui présente au moins une cavité (5) partiellement entourée par le corps de dispositif (4) et dans laquelle peut être inséré un corps de contact qui peut être lié par une force au corps de dispositif (4),
dans lequel l'au moins une cavité (5) est prévue dans une surface assise (2) du siège (1) et est ouverte sur une face avant (7) de la surface assise (2), de sorte qu'un passager puisse laisser le corps de contact près de lui pendant qu'il est assis, la partie d'aménagement intérieur étant un accoudoir (3).

2. Habitacle selon la revendication 1, **caractérisé en ce que** le siège (1) ou le groupe de sièges (18) présente un espace de rangement (20) avec un dispositif de sécurisation de chargement sous sa surface assise (2) ou ses surfaces assises.

3. Habitacle selon la revendication 2, **caractérisé en ce que** le dispositif de sécurisation de chargement présente au moins un rail de sécurisation de chargement.

4. Habitacle selon l'une des revendications 1 à 3, **caractérisé en ce que** le corps de dispositif (4) dans la zone de l'au moins une cavité (5) est recouvert au moins partiellement d'un corps d'adhésion (6).

5. Habitacle selon la revendication 4, **caractérisé en ce que** le corps d'adhésion (6) est réalisé au moins partiellement magnétique.

6. Habitacle selon l'une des revendications 1 à 3, **caractérisé en ce que** le corps de dispositif (4) dans la zone de l'au moins une cavité (5) présente un revêtement antidérapant.

7. Habitacle selon l'une des revendications 1 à 3, **caractérisé en ce que** le corps de dispositif (4) dans la zone de l'au moins une cavité (5) est réalisé au moins partiellement magnétique ou au moins un aimant est prévu dans l'au moins une cavité (5).

8. Habitacle selon la revendication 5 ou 7, **caractérisé en ce que** le corps de contact dans la zone de contact avec le corps d'adhésion (6), le corps de dispositif (4) ou l'au moins un aimant est réalisé de forme convexe sphérique et le corps d'adhésion (6), le corps de dispositif (4) ou l'au moins un aimant est réalisé de forme concave sphérique.

9. Habitacle selon l'une des revendications 1 à 8, **caractérisé en ce que** le corps de dispositif (4) dans la zone de l'au moins une cavité (5) présente un dispositif de verrouillage (11) .

10. Habitacle selon la revendication 9, **caractérisé en ce que** le dispositif de verrouillage (11) présente au moins un premier moyen de verrouillage (12) lié au corps de dispositif (4) par un premier ressort (14).

11. Habitacle selon la revendication 9, **caractérisé en ce que** le dispositif de verrouillage (11) présente au moins une protubérance de verrouillage (24).

12. Habitacle selon l'une des revendications 1 à 11, **caractérisé en ce que** l'au moins une cavité (5) est réalisée au moins partiellement en forme de coin.

13. Habitacle selon l'une des revendications 1 à 12, **caractérisé en ce que** l'au moins une cavité (5) est réalisée au moins partiellement en forme cylindrique.

14. Habitacle selon l'une des revendications 1 à 13, **caractérisé en ce que** le corps de contact fait partie d'un dispositif de roulement, en particulier le guidon (8) d'une trottinette (9).
